# EUROPÄISCHE PATENTSCHRIFT

(11) **EP 3 093 938 B1**
(45) Veröffentlichungstag und Bekanntmachung des Hinweises auf die Patenterteilung: **14.07.2021**
(21) Anmeldenummer: 15167335.7
(22) Anmeldetag: 12.05.2015
(51) Int. Cl.: H02G 3/22

(54) **HOCHSPANNUNGS-DURCHFÜHRUNGSSYSTEM**
HIGH VOLTAGE IMPLEMENTATION SYSTEM
SYSTÈME D'EXÉCUTION HAUTE TENSION

(43) Veröffentlichungstag der Anmeldung: 16.11.2016
(73) Patentinhaber: Siemens Energy Global GmbH & Co. KG, 81739 München (DE)
(72) Erfinder: Findeisen, Jörg, 01156 Dresden (DE)

(56) Entgegenhaltungen:
- EP-A1- 0 383 988
- EP-A1- 0 898 106
- EP-A1- 2 595 263
- DE-A1- 2 849 560
- US-A- 4 161 621
- US-A- 5 341 724
- US-A- 5 907 123
- "Access Pipe Entry Kit - Fibrelite", , 31. Januar 2011 (2011-01-31), Seiten 1-3, XP055211872, Gefunden im Internet: URL:http://www.fibrelite.com/documents/pro ducts/PCE-1-KIT.pdf [gefunden am 2015-09-08]

## Beschreibung

Die Erfindung betrifft ein Hochspannungs-Durchführungssystem zur isolierten Führung eines Stromleiters durch eine Öffnung einer Wandung zwischen zwei fluidgefüllten Räumen, umfassend einen zentralen Stromleiter und einen diesen dicht umgebenden, sich in radialer Richtung vom Stromleiter erstreckenden Isolierkörper mit einer umgebenden äußeren Montagefläche zur dichten Befestigung des Isolierkörpers an der Wandung, wobei der Isolierkörper aus mindestens zwei an einer Kontaktfläche verbundenen Modulen gebildet ist, wobei eines der Module ein den Stromleiter radial einhüllendes Kerndurchführungsmodul bildet und die Kontaktfläche den Stromleiter beabstandet umschließt.

Ein solches Hochspannungs-Durchführungssystem ist aus der EP 2 595 263 A1 bereits bekannt. Dort ist eine Durchführung offenbart, die zwischen zwei Gasräumen eines Hochspannungsschalters angeordnet ist. Die Hochspannungs-Durchführung umfasst einen zentralen Stromleiter sowie einen diesen umgebenden Isolierkörpern, der aus zwei unterschiedlichen Modulen besteht.

Weitere Durchführungssysteme dieser Art sind aus der EP 0 898 106 A1, der US 5,341,724 A, der US5907123A, der DE2849560A1 sowie aus der US 4,161,621 A bereits bekannt.

Hochspannungs-Durchführungssysteme dienen zur Herstellung einer elektrischen Verbindung zwischen zwei fluidgefüllten Räumen eines elektrischen Gerätes. Solche Geräte sind beispielsweise Öltransformatoren, Schaltanlagen, und GIL (Gasgefüllte Leitungen). Solche Durchführungen werden nach dem Stand der Technik als RIP-(Resin Impregnated Paper-)Durchführung ausgeführt.

Typischerweise enthält eine solche Durchführung einen feldsteuernden Kondensatorwickel, der auf einen metallischen Zylinder aufgewickelt ist. Die Länge einer solchen Durchführung wird maßgeblich durch die für beide Fluidräume erforderlichen elektrischen Gleitstrecken bestimmt. Nachteilig sind die hohen Kosten, sowie der erhebliche Raumbedarf solcher Durchführungen. Nachteilig ist weiterhin, dass alle diese Durchführungen nur für einen eingegrenzten Spannungsbereich zur Verfügung stehen. Somit ist für jeden Spannungsbereich eine in Größe, Geometrie und Material unterschiedlich gestaltete Durchführung vorzusehen.

Es ist daher Aufgabe der Erfindung, ein Hochspannungs-Durchführungssystem der eingangs genannten Art anzugeben, welches für einen besonders breiten Spannungsbereich einsetzbar ist und einen geringen Raumbedarf benötigt.

Diese Aufgabe wird erfindungsgemäß dadurch gelöst, dass in einer Aufsicht das Kerndurchführungsmodul kreisförmig ausgebildet ist und die Teile des Kerndurchführungsmoduls, die das elektrische Potential des Stromleiters führen, insbesondere hinsichtlich ihrer geometrischen Gestaltung derart auf eine maximal vorgesehene Anzahl von Modulen ausgelegt sind, dass bei der bei der maximal vorgesehenen Anzahl von Modulen auftretenden Spannung die zulässige elektrische Feldstärke der eingesetzten Isoliermaterialien des Kerndurchführungsmoduls nicht überschritten wird, wobei die jeweilige Kontaktfläche zwischen zwei Montageflächen der jeweils an ihr verbundenen Module gebildet ist und wobei in der Kontaktfläche zwischen zwei Montageflächen eine Dichtung angeordnet ist.

Die Erfindung geht dabei von der Überlegung aus, dass ein im Gussverfahren hergestellter Isolierkörper, der im Einbauzustand die Trennwand zwischen den beiden fluidgefüllten Räumen darstellt und Vorrichtungen zur Befestigung, Abdichtung und Abschirmung des Stromleiters aufweist, ein vergleichsweise teures und aufwändiges Bauteil ist, dessen Herstellung mit hohen Kosten verbunden ist. Da für unterschiedliche Spannungen stets unterschiedliche Geometrien von Isolierkörpern notwendig sind, sind für jeden Spannungsbereich ein separater Isolierkörper und damit ein separater Herstellungsprozess z. B. mit eigenen Gussformen erforderlich. Dieses Problem ist dadurch lösbar, dass der Isolierkörper modular aufgebaut ist und dabei insbesondere aus mindestens zwei Modulen gebildet ist, die einander umschließen. Durch Hinzufügen oder Wegnehmen eines äußeren flanschartigen Isolierflanschmoduls kann der Isolierkörper des Hochspannungs-Durchführungssystems somit für unterschiedliche Spannungen angepasst werden.

Erfindungsgemäß ist die jeweilige Kontaktfläche zweier Module zwischen zwei Montageflächen der jeweils an ihr verbundenen Module gebildet. Die Montageflächen dienen zur komfortablen Verbindung, beispielsweise durch Verschrauben oder Verkleben. Sie können vorteilhaft als Flansche ausgeführt sein. In der rotationssymmetrischen Ausführung sind die Kontaktflächen und Montageflächen je nach Ausrichtung als Ringe, Kreisringe oder kegelartig abgeschrägt ausgebildet.

Im Rahmen der Erfindung ist ferner in der Kontaktfläche zwischen zwei Montageflächen eine Dichtung angeordnet. Dies ist insbesondere bei einer Verschraubung der einzelnen Module miteinander von Vorteil, um die Abdichtung der fluidgefüllten Räume durch das Hochspannungs-Durchführungssystem zuverlässig zu gewährleisten. Vorteilhafterweise sind die Verschraubungselemente dabei aus einem Material gefertigt, welches weitgehend gleiche dielektrische Eigenschaften aufweist wie die Isolierkörper der Kerndurchführung und der Isolierflanschmodule. Dabei sind in bestimmten Anwendungsfällen kostengünstige Verschraubungselemente auf Basis von glasfaserverstärkten Epoxid- oder Polyesterharzsystemen einsetzbar.

Vorteilhafterweise sind die Teile des Kerndurchführungsmoduls, die das elektrische Potential des Stromleiters führen, insbesondere hinsichtlich ihrer geometrischen Gestaltung derart auf eine maximal vorgesehene Anzahl von Modulen ausgelegt dass bei der bei der maximal vorgesehenen Anzahl von Modulen auftretenden Spannung die zulässige elektrische Feldstärke der eingesetzten Isoliermaterialien des Kerndurchführungsmoduls nicht überschritten wird. Mit anderen Worten: Die Auslegung und geometrische Gestaltung aller Teile der Kerndurchführung, die das elektrische Potential des Stromleiters führen, erfolgt derart, dass die Anwendung der maximal vorgesehenen Modulanzahl berücksichtigt ist. Demzufolge wird auch bei der Anwendung der maximalen Anzahl der Isolierflanschmodule, und damit bei der höchsten Prüfspannung des Gesamtsystems, die zulässige elektrische Feldstärke der eingesetzten Isoliermaterialien des Kerndurchführungsmoduls nicht überschritten.

Der Isolierkörper, d. h. die Wandungen der Isolierkörper der Kerndurchführung und der Isolierflanschmodule stellen vorteilhafterweise zumindest teilweise direkt die Trennschicht zwischen den beiden fluidgefüllten Räumen dar und bilden damit vorteilhafterweise auf jeder Seite jeweils eine elektrische Gleitstrecke. Die parallele beidseitige Nutzung der Oberflächen der Isolierkörper in den getrennten Fluidräumen führt zu einer erheblichen Reduzierung der axialen Abmessungen des Hochspannungs-Durchführungssystems.

Eine noch größere Flexibilität hinsichtlich des Spannungsbereichs ist erreichbar, indem der Isolierkörper aus mehr als zwei an jeweils einer Kontaktfläche verbundenen Modulen gebildet ist, wobei die Kontaktflächen den Stromleiter beabstandet umschließen und in radialer Richtung ineinander geschachtelt sind. Auf diese Weise wird ein modulares System von Hochspannungs-Durchführungen gebildet, bei dem die für verschiedene Spannungen erforderlichen elektrischen Abstände und die elektrischen Gleitstrecken für höhere Spannungen jeweils durch Hinzufügen von Isolierflanschmodulen gewährleistet werden.

In besonders vorteilhafter Ausgestaltung ist das Hochspannungs-Durchführungssystem im Wesentlichen rotationssymmetrisch ausgebildet. Dies erleichtert zum einen die Herstellung, zum anderen ist eine rotationssymmetrische Ausgestaltung sinnvoll, da in jede Raumrichtung die gleiche Potentialdifferenz der Wandung zum Stromleiter vorliegt und somit auch in jeder Raumrichtung in gleicher Weise eine identische geometrische Ausgestaltung zur Isolierung notwendig und sinnvoll ist. Damit sind auch jedes der Isolierflanschmodule sowie das Kerndurchführungsmodul, aus denen der Isolierkörper gebildet ist, entsprechend rotationssymmetrisch ausgebildet, jeweils zur Achse des Stromleiters. In der Aufsicht in Richtung der Achse des Stromleiters ist das Kerndurchführungsmodul kreisförmig, die umgebenden Isolierflanschmodule jeweils kreisringförmig. Im axial-radialen Schnitt sind natürlich beliebige Formen möglich.

In vorteilhafter Ausgestaltung sind die äußere Montagefläche und eine Kontaktfläche und/oder benachbarte Kontaktflächen in axialer Richtung voneinander beabstandet. Hierdurch ist es möglich, die elektrischen Gleitstrecken, d. h. die räumliche Strecke zwischen Leiter und Wandung entlang der Oberfläche des Isolierkörpers zu verlängern, ohne die Ausdehnung in radialer Richtung zu vergrößern. Dadurch wird der Raumverbrauch des Isolierkörpers bei gleicher Isolationswirkung verbessert.

Vorteilhafterweise ist dabei die axiale Abfolge der Kontaktflächen anhand der Größe des jeweiligen Umfangs angeordnet. Mit anderen Worten: Je kleiner der Umfang einer Kontaktfläche ist, desto weiter ist sie in derselben axialen Richtung von der Ebene der Wandung entfernt. Hierdurch ergibt sich eine kegelartige Form des Isolierkörpers, durch den ein besonders großer axialer Abstand des Kerndurchführungsmoduls zur Wandung erreicht wird. Dies kann beispielsweise sinnvoll sein, wenn die beiden Seiten der Durchführung mit Fluiden verschiedener elektrischer Eigenschaften befüllt werden.

In weiterer vorteilhafter Ausgestaltung weist zumindest eines der Module eine umlaufende Auswölbung auf. Derartige, z. B. schirmartig ausgebildete Auswölbungen dienen der Verlängerung der elektrischen Gleitstrecken. Wird das Hochspannungs-Durchführungssystem zwischen mit unterschiedlichem Isolierfluid befüllten Räumen eingesetzt, so können durch solche Auswölbungen die elektrischen Gleitstrecken auf einfache Weise an die Anforderungen unterschiedlicher Fluide anpasst werden.

Zur weiteren Verlängerung der Gleitstrecken weist zumindest eines der Module vorteilhafterweise einen in radialer Richtung wellenförmigen Querschnitt auf. Auch ein derartiger wellen- oder faltenartiger Querschnitt verlängert die Gleitstrecke, ohne die radiale Ausdehnung zu vergrößern.

Vorteilhafterweise ist das Kerndurchführungsmodul und/oder das jeweilige andere Modul, d. h. das Isolierflanschmodul aus einem Polymer geformt. Polymere haben vergleichsweise gute Isolationseigenschaften, lassen sich im Gussverfahren vergleichsweise einfach formen und weisen auch die notwendige mechanische Stabilität auf.

Das Kerndurchführungsmodul umfasst vorteilhafterweise ein koaxial um den Stromleiter liegendes, zylindermantelförmiges metallisches Beschirmungsformteil. Dieses dient als zusätzliche Beschirmung, die in die Isoliermasse des Kerndurchführungsmoduls eingebettet ist.

Das Beschirmungsformteil ist dabei vorteilhafterweise als Streckmetallkorb ausgebildet, wobei die Größe der Maschen entsprechend den elektrischen Anforderungen und der Viskosität des Vergussmaterials jeweils optimiert werden sollte. Bei dieser Variante ist eine gute Einbindung der Beschirmung in den Isolierkörper erreichbar. Vorteilhafterweise ist dieser Streckmetallkorb zumindest einseitig von einer elektrisch leitfähigen Gießharzschicht bedeckt, oder in eine Zwischenschicht aus elektrisch leitfähigem Gießharz eingebettet.

In weiterer vorteilhafter Ausgestaltung des Hochspannungs-Durchführungssystems weist das Kerndurchführungsmodul und/ oder das jeweilige andere Modul, d. h. das Isolierflanschmodul eine innenliegende Verstärkung aus einem Faserverbundwerkstoff auf. Diese dienen der Erhöhung der mechanischen Festigkeit und können in die Polymermasse des Isolierkörpers eingebettet werden. Sie erstrecken sich gegebenenfalls auch in die genannten Auswölbungen. Sie können vorteilhaft als Wickellagen von mit Harz getränkten Filamentbandagen ausgeführt sein. Vorzugweise sind diese sich kreuzend angeordnet.

In noch weiterer vorteilhafter Ausgestaltung des Hochspannungs-Durchführungssystems weist das radial am weitesten vom Stromleiter entfernte Modul (Isolierflanschmodul) des Isolierkörpers einen Spannungsmessanschluss auf. Dieser kann z. B. durch einen im äußeren Isolierflanschmodul eingegossenen Runddraht gebildet sein.

Ein Transformator weist vorteilhafterweise ein beschriebenes Hochspannungs-Durchführungssystem auf. Gerade hier ist eine derartige Durchführung von besonderem Vorteil: Werden Transformatoren über Hochspannungskabel angeschlossen, kommen bei höheren Spannungen bevorzugt ölgefüllte Kabelkästen zum Einsatz. Der Ölraum dieser Kabelanschlusskästen wird zur Erhöhung der Betriebssicherheit und zur Erleichterung von Wartungs-, und Montagearbeiten vom Ölraum des Transformators getrennt. Zur Herstellung der elektrischen Verbindung zwischen Kabelanschlusskasten und Transformator sollte daher das beschriebene Hochspannungs-Durchführungssystem insbesondere als Öl-Öl-Durchführung zum Einsatz kommen.

Die mit der Erfindung erzielten Vorteile bestehen insbesondere darin, durch einen modularen Aufbau eines Isolierkörpers der Hochspannungs-Durchführung ein Kerndurchführungsmodul, welches durch die Befestigung und Abschirmung des Stromleiters und des Montagesystems komplizierte Fertigungsvorrichtungen benötigt (z. B. Gießform), für mehrere Spannungsebenen zu nutzen und mit jeweils einfach herstellbaren Zusatzteilen für die verschiedenen Spannungsebenen zu ertüchtigen. Nach dem gleichen Prinzip ist auch eine Ertüchtigung der Durchführung für den Betrieb in Isolierfluiden mit abweichenden dielektrischen Eigenschaften oder auch die Ertüchtigung von Durchführungen für den Betrieb unter die elektrischen Eigenschaften negativ beeinflussenden Betriebstemperaturen möglich.

Durch den modularen Aufbau des Hochspannungs-Durchführungssystems ist eine beträchtliche Senkung der Kosten und des Fertigungsaufwandes erzielbar. Auch die Montage wird erleichtert, da durch die geringe Masse der einzelnen Module kein Hebezeug erforderlich ist. Durch Einsatz eines einheitlichen Kerndurchführungsmoduls für mehrere Spannungsebenen wird ein hoher Standardisierungsgrad erreicht.

Ausführungsbeispiele der Erfindung werden anhand von Zeichnungen näher erläutert. Darin zeigen:
- FIG 1: eine Schnittansicht eines modular aufgebauten Hochspannungs-Durchführungssystems mit konischem Aufbau,
- FIG 2: einen Längsschnitt durch ein modular aufgebautes Hochspannungs-Durchführungssystem mit konischem Aufbau, Innenverstärkung und Messanschluss,
- FIG 3: eine Explosionsdarstellung des Hochspannungs-Durchführungssystems aus FIG 1,
- FIG 4: einen Längsschnitt durch ein modular aufgebautes Hochspannungs-Durchführungssystem mit zylindrischem eingebettetem Beschirmungsformteil,
- FIG 5: einen Schnitt durch einen Transformator mit einem modular aufgebauten Hochspannungs-Durchführungssystem,
- FIG 6: einen Längsschnitt durch ein modular aufgebautes Hochspannungs-Durchführungssystem mit teilweise wellenartig geformtem Isolierkörper,
- FIG 7: einen Längsschnitt durch ein modular aufgebautes Hochspannungs-Durchführungssystem mit konischem Aufbau und einer Vielzahl von Auswölbungen, und
- FIG 8: einen Längsschnitt durch ein modular aufgebautes Hochspannungs-Durchführungssystem mit axial vergleichsweise flachem Aufbau.

Gleiche Teile sind in allen Figuren mit denselben Bezugszeichen versehen.

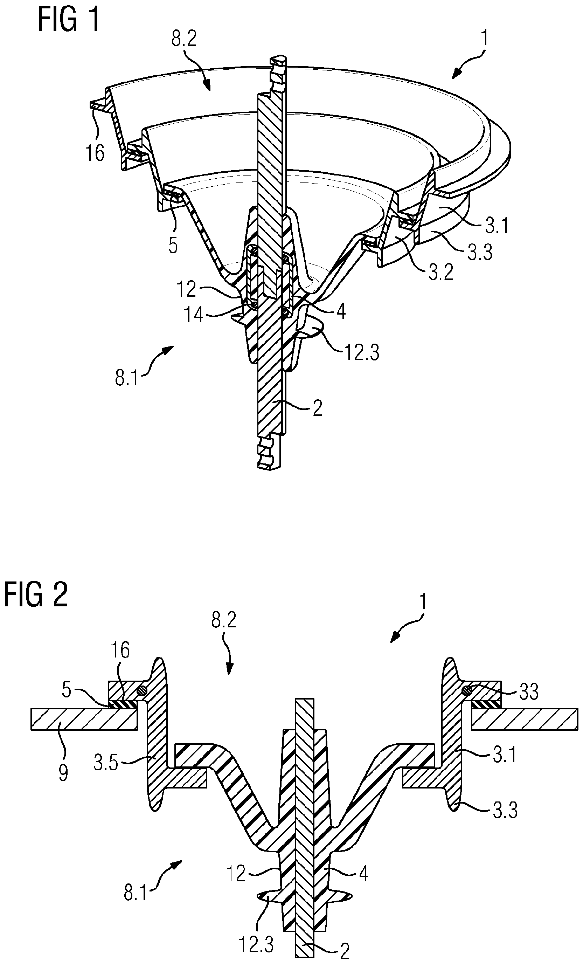

FIG 1 zeigt ein modular aufgebautes, rotationssymmetrisch ausgebildetes Hochspannungs-Durchführungssystem 1. Alle im Folgenden dargestellten Hochspannungs-Durchführungssysteme 1 sind rotationssymmetrisch ausgebildet. Entlang ihrer Achse, so auch in der Achse des Hochspannungs-Durchführungssystems 1 nach der FIG 1, ist ein elektrischer Stromleiter 2 in Form eines im Wesentlichen langgestreckten Zylinders angeordnet. Mittels des Stromleiters 2 soll eine elektrische Verbindung zwischen zwei fluidgefüllten Räumen hergestellt werden.

Um den Stromleiter 2 ist bündig ein Isolierkörper angeordnet, welcher mehrteilig, d. h. modular ausgebildet ist: Er umfasst von außen nach innen ein außenliegendes, im Wesentlichen kegelstumpfmantelförmiges Isolierflanschmodul 3.1, ein daran anschließendes, ebenfalls im Wesentlichen kegelstumpfmantelförmiges Isolierflanschmodul 3.2, welches jedoch einen geringeren Durchmesser hat, und ein koaxial innen liegendes Kerndurchführungsmodul 4. Die Kontaktflächen zwischen den Isolierflanschmodulen 3.1, 3.2 und dem Kerndurchführungsmodul 4 sind kreisscheibenförmig durch entsprechende Montageflächen gebildet. Zwischen den Montageflächen ist jeweils eine kreisringförmige Dichtung 5 angeordnet. An den Montageflächen sind die Isolierflanschmodule 3.1, 3.2 und Kerndurchführungsmodul 4 mit der Dichtung 5 verklebt oder verschraubt. In anderen Ausführungen können auch noch weitere Isolierflanschmodule 3.1, 3.2 in radialer Abfolge vorgesehen sein.

Der Isolierkörper des Hochspannungs-Durchführungssystems 1 trennt in der im Folgenden noch dargestellten Anwendung einen ersten fluidgefüllten Raum 8.1, z. B. den ölgefüllten Innenraum eines Transformators, dicht von einem zweiten fluidgefüllten Raum 8.2, z. B. dem ölgefüllten Innenraum des Kabelanschlusskastens. Der Begriff dicht im Sinne dieser Beschreibung meint daher zumindest flüssigkeitsdicht, vorzugsweise fluiddicht. Die Isolierflanschmodule 3.1, 3.2 sind aus einem Isoliermaterial gefertigt.

Die Isolierflanschmodule 3.1, 3.2 weisen beiderseitig sich in axialer Richtung erstreckende Auswölbungen 3.3 auf. Hierdurch ist die Oberfläche des Isolierkörpers derart gestaltet, dass sowohl die innere Wandung, als auch die äußere Wandung jeweils längere elektrische Gleitstrecken zwischen dem Stromleiter 2 und dem in FIG 1 nicht gezeigten Gehäuse der elektrischen Einrichtung bilden. Somit ist ein gegenüber dem Stand der Technik in axialer Richtung stark verkürztes Hochspannungs-Durchführungssystem 1 herstellbar.

Das Kerndurchführungsmodul 4 umschließt in koaxialer Anordnung den längs der Achse geführten Stromleiter 2, welcher koaxial von einem Innenisolierkörper 12 des Kerndurchführungsmoduls 4 umgeben ist. Dieser Innenisolierkörper 12 wird im Ausführungsbeispiel aus einer gießbaren Polymermasse gebildet. Auch der Innenisolierkörper 12 weist zur Verlängerung der elektrischen Gleitstrecke eine weitere, sich radial erstreckende Auswölbung 12.3 auf.

Auch die Isolierflanschmodule 3.1, 3.2 des Isolierkörpers sind gegossen. Sie weisen wie schon beschrieben jeweils äußere Montageflächen zur Verbindung auf. Die am äußersten Isolierflanschmodul 3.1 angeordnete Montagefläche 16 dient zur Befestigung an der nicht dargestellten Wandung oder aber zur Anfügung weiterer Isolierflanschmodule. Die beschriebenen Kontaktflächen zwischen den Isolierflanschmodulen 3.1, 3.2 und dem Kerndurchführungsmodul 4 sind mit fallendem Abstand vom Stromleiter 2, d. h. mit kleinerem Radius auch monoton in immer größeren Abständen von der Montagefläche 16 an der Wandung entfernt. Hierdurch ergibt sich eine kegelartige Gesamtform des Isolierkörpers des Hochspannungs-Durchführungssystems 1.

In der dargestellten Ausführungsform der FIG 1 ist der Stromleiter 2 teilbar ausgeführt. Damit ist eine vereinfachte Montage der Leitungsführung des Transformators möglich. Weiterhin ist im Ausführungsbeispiel der Innenisolierkörper 12 des Kerndurchführungsmoduls 4 auf seiner koaxialen Innenseite mit einem in die Isoliermasse eingebetteten Beschirmungsformteil 14 versehen, welche den Stromleiter 2 und vorhandene Montageteile umschließt.

Durch entsprechende geometrische Gestaltung des Beschirmungsformteils 14 wird die Feldstärke im angrenzenden Bereich des Isolierkörpers reduziert. Die Auslegung und geometrische Gestaltung dieser Abschirmung erfolgt für die bei Verwendung der maximalen Modulzahl auftretenden elektrischen Feldstärken, also für die höchste Prüfspannung des gesamten modularen Hochspannungs-Durchführungssystems 1.

Das Kerndurchführungsmodul 4 bildet bereits eine vollwertige Hochspannungs-Durchführung, deren Spannungsfestigkeit von der Geometrie des Innenisolierkörpers 12 bestimmt wird. Abhängig von der Betriebsspannung der elektrischen Anlage wird das Kerndurchführungsmodul 4 mit einem oder mehreren radial äußeren Isolierflanschmodulen 3.1, 3.2 versehen und bildet so ein modulares Hochspannungs-Durchführungssystem 1.

In einer weiteren, nicht dargestellten Ausführungsform, die auch bei den folgenden Ausführungsbeispielen zur Anwendung kommen kann, ist die zusätzliche Einbettung eines Kondensatorwickels in die Polymermasse des Kerndurchführungsmoduls 4 zur Beeinflussung und Vergleichmäßigung des elektrischen Feldes möglich. Weitere Kondensatorwickel können abgestimmt auf das Kerndurchführungsmodul 4 in den Isolierflanschmodulen 3.1, 3.2 platziert werden.

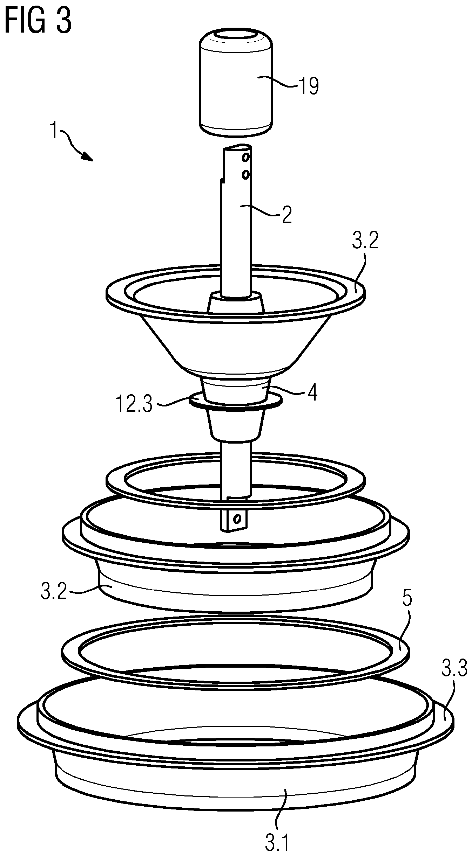

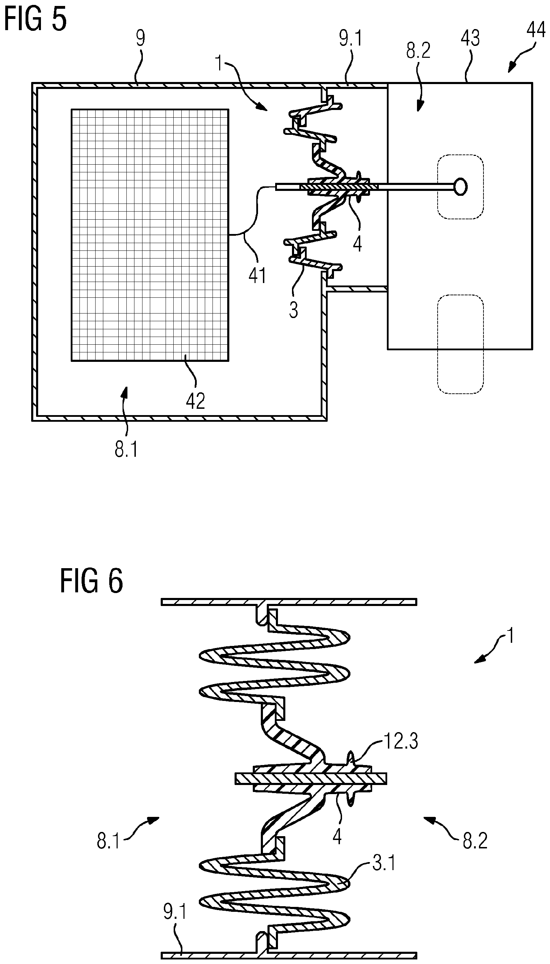

Die weiteren Figuren zeigen bis auf FIG 3 und FIG 5 andere Ausführungsbeispiele des Hochspannungs-Durchführungssystems 1, die Varianten darstellen und daher zur Vermeidung von Wiederholungen anhand ihrer wesentlichen Unterschiede zum Ausführungsbeispiel der FIG 1 erläutert werden. Bereits in vorhergehenden Figuren beschriebene, gleich ausgebildete Teile werden ebenfalls nicht gesondert beschrieben.

FIG 2 zeigt ein Ausführungsbeispiel des Hochspannungs-Durchführungssystems 1 im Längsschnitt, welches aus dem Kerndurchführungsmodul 4 und nur einem dieses koaxial ummantelnden Isolierflanschmodul 3.1 gebildet wird. Das Isolierflanschmodul 3.1 weist hierbei eine eher zylindermantelförmige Form auf. Im Ausführungsbeispiel ist der Stromleiter 2 fest mit dem Innenisolierkörper 12 verbunden. Zur Verlängerung der elektrischen Gleitstrecken sind auch hier Kerndurchführungsmodul 4 und das dieses umgebende Isolierflanschmodul 3.1 mit schirmartigen Auswölbungen 3.3, 12.3 versehen. In FIG 2 ist auch die Wandung 9 gezeigt, die eine kreisförmige Öffnung aufweist, in der das Hochspannungs-Durchführungssystem 1 mittels der Montagefläche 16 dicht befestigt, d. h. verklebt oder verschraubt wird.

Das Hochspannungs-Durchführungssystem 1 in der FIG 2 ist mit einem Spannungsmessanschluss 33 versehen. Dieser wird im Ausführungsbeispiel durch einen im äußeren Isolierflanschmodul 1 eingegossenen Runddraht gebildet. Besteht das Hochspannungs-Durchführungssystem 1 wie z. B. im Ausführungsbeispiel nach der FIG 1 aus einer Vielzahl von das Kerndurchführungsmodul 4 umgebenden Isolierflanschmodulen 3.1, 3.2 unterschiedlicher Durchmesser, so wird nur in das jeweils äußerste Isolierflanschmodul 3.1 der entsprechende Spannungsmessanschluss eingegossen. Alternativ kann der Spannungsmessanschluss aus einem halbleitenden Kunststoff gebildet sein.

Im Ausführungsbeispiel nach der FIG 2 weisen die Isolierflanschmodule 3.1, 3.2 und das Kerndurchführungsmodul 4 innenliegende Verstärkungen 3.5 in Form von Wickellagen von mit Harz getränkten Filamentbandagen zur Erhöhung der Druckfestigkeit auf. Diese sind sich kreuzend angeordnet. Der Stromleiter 2 ist im Ausführungsbeispiel nicht lösbar mit dem Innenisolierkörper 12 des Kerndurchführungsmoduls 4 verbunden.

FIG 3 zeigt eine Explosionsdarstellung der in Bezug zur FIG 1 beschriebenen Ausführungsform eines Hochspannungs-Durchführungssystems 1. Im Ausführungsbeispiel sind die Module 3.1, 3.2, 4 des Hochspannungs-Durchführungssystems 1 durch nicht dargestellte Verschraubungen aus elektrisch isolierendem Material zusammengefügt. Die Abdichtung erfolgt jeweils mittels der beschriebenen, kreisringförmigen Dichtungen 5, welche ebenfalls aus elektrisch isolierendem Material hergestellt sind. In FIG 3 ist zusätzlich noch eine bei der Montage axial verschiebbar angeordnete Abschirmelektrode 19 dargestellt, die im Ausführungsbeispiel die Anschlussteile des elektrischen Anschlusses des Hochspannungs-Durchführungssystems 1 umschließt.

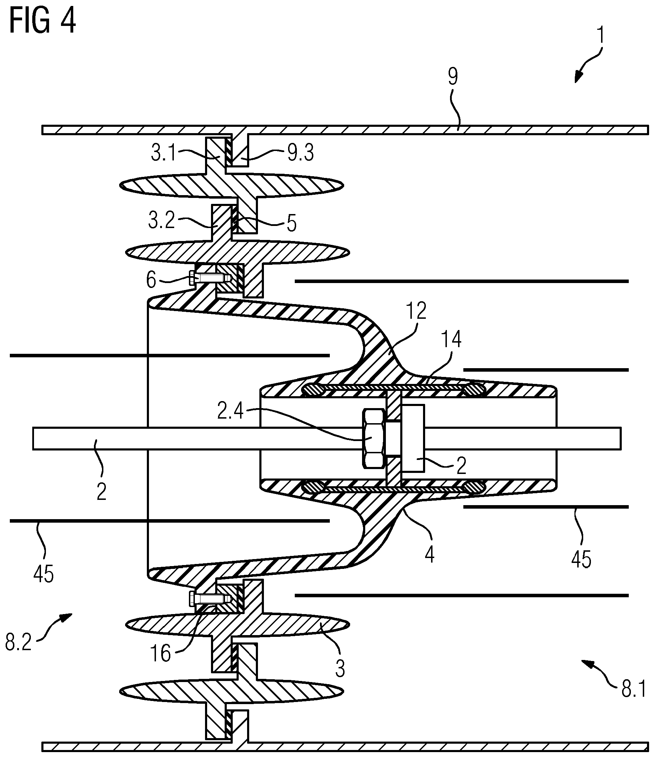

FIG 4 zeigt ein Ausführungsbeispiel mit einem Hochspannungs-Durchführungssystem 1, welches wiederum mehrteilig aus einem koaxial innen liegenden Kerndurchführungsmodul 4 und zwei dieses koaxial umgebenden Isolierflanschmodulen 3.1, 3.2 gebildet wird. Die Kerndurchführungsmodule 3.1, 3.2 sind hierbei beide im Wesentlichen zylindermantelförmig ausgestaltet.

Das Kerndurchführungsmodul 4 weist in koaxialer Anordnung den längs der Achse geführten Stromleiter 2 auf, welcher koaxial vom Innenisolierkörper 12 umgeben ist. Dieser Innenisolierkörper 12 wird wie die Isolierflanschmodule 3.1, 3.2 hier ebenfalls aus einer gießbaren Polymermasse gebildet. Der Gusskörper dieses Innenisolierkörpers 12 ist derart ausgeformt, dass eine koaxial außen liegende flanschförmige Montagefläche gebildet wird, mit der die Verbindung zum anliegenden Isolierflanschmodul 3.2 hergestellt wird.

Die Module 3.1, 3.2, 4 sind untereinander mit Schrauben 6 aus Isoliermaterial verschraubt. Hier wie in allen anderen Ausführungsbeispielen kann aber alternativ oder zusätzlich auch eine fluiddichte Verklebung der Module 3.1, 3.2, 4 untereinander erfolgen.

Im Ausführungsbeispiel der FIG 4 wird der Stromleiter 2 durch einen lösbaren Leiterbolzen gebildet, welcher durch eine Befestigungsvorrichtung im Gießharzkörper arretiert und mit einer auf der vom inneren fluidgefüllten Raum 8.1 abgewandten Seite angeordneten Mutter 2.4 verschraubt wird. Somit ist das Hochspannungs-Durchführungssystem 1 ohne Handlöcher zum inneren fluidgefüllten Raum 8.1 montierbar. In FIG 4 ist die Wandung 9 zylindrisch ausgestaltet und weist zur Montage des Hochspannungs-Durchführungssystems 1 einen separaten Kragen 9.3 auf.

Der Innenisolierkörper 12 des Kerndurchführungsmoduls 4 ist im Ausführungsbeispiel der FIG 4 auf seiner koaxialen Innenseite mit einer in die Isoliermasse eingebetteten Beschirmung versehen, welche den Stromleiter 2 und vorhandene Montageteile umschließt. Diese Beschirmung ist als metallisches, zylindermantelförmiges Beschirmungsformteil 14 gestaltet. Die Beschirmung kann z. B. durch ein Drahtgitter gebildet sein, welches in die Isoliermasse eingebettet ist. Dieses Drahtgitter wird in einer speziellen Ausgestaltung zumindest einseitig von einer elektrisch leitfähigen Gießharzschicht bedeckt, oder in eine Zwischenschicht aus elektrisch leitfähigem Gießharz eingebettet.

Die Auslegung und geometrische Gestaltung dieser Beschirmung erfolgt für die bei Verwendung der maximalen Modulzahl auftretenden elektrischen Feldstärken, also für die höchste Prüfspannung des gesamten modularen Hochspannungs-Durchführungssystems. Im Ausführungsbeispiel der FIG 4 geschieht dies durch eine entsprechende Vergrößerung der Radien und Überstände an den beiden Enden des ansonsten zylindrisch ausgeführten Beschirmungsformteils 14.

Zur Verlängerung der elektrischen Gleitstrecken sind auch hier Kerndurchführungsmodul 4 und Isolierflanschmodule 3.1, 3.2 mit schirmartigen, in axialer Richtung erstreckten Auswölbungen 3.3, 12.3 versehen. Zur Erhöhung der elektrischen Durchschlagsspannungsfestigkeit ist zudem das Einfügen zusätzlicher, rohrförmiger axialer Barriereanordnungen 45 aus Isoliermaterial in den Räumen 8.1, 8.2 vorgesehen. Diese werden über den Innenisolierkörper 12 überlappend angeordnet und weisen in Richtung der Räume 8.1, 8.2 jeweils einen Überstand auf.

FIG 5 zeigt ein Anwendungsbeispiel des modularen Hochspannungs-Durchführungssystems 1 zwischen zwei fluidgefüllten Räumen 8.1, 8.2, welche jeweils elektrische Bauteile enthalten. Im Beispiel der FIG 5 wird über das Hochspannungs-Durchführungssystem 1 in einem Durchführungsdom 9.1 des Gehäuses 9 die Wicklung 42 eines Transformators 44 mit einem Kabelanschlusskasten 43 verbunden. Unter einem Kabelanschlusskasten 43 wird dabei die Baugruppe des Transformators 44 verstanden, welche den Kabelendverschluss und die Schnittstelle zur Hochspannungs-Durchführung des Transformatoranschlusses umschließt. Nach gleichem Prinzip kann in anderen Ausführungsbeispielen die Verbindung zu anderen elektrischen Baugruppen, zum Beispiel Gleichrichtereinheiten, Wechselrichtern oder Leistungsschaltern erfolgen.

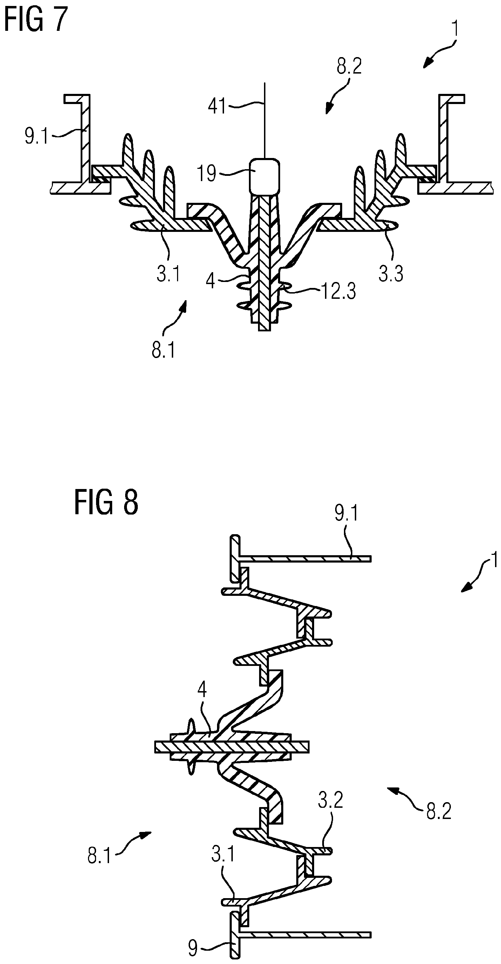

Die konisch ausgebildeten Isolierflanschmodule 3.1, 3.2 des modularen Hochspannungs-Durchführungssystems 1 sind im Ausführungsbeispiel der FIG 5 jeweils ihre Ausrichtung ändernd angeordnet. Das Hochspannungs-Durchführungssystem 1 aus der FIG 5 wird noch in FIG 8 näher gezeigt. Auf diese Weise wird die Ausbildung großer Gleitstrecken bei geringem axialem Raumbedarf möglich.

FIG 6 zeigt ein Ausführungsbeispiel eines Hochspannungs-Durchführungssystems 1 im Längsschnitt mit einem wellen- oder faltenartig ausgeführten Isolierflanschmodul 3.1, welches das einzige Isolierflanschmodul 3.1 des Hochspannungs-Durchführungssystems 1 außer dem Kerndurchführungsmodul 4 ist. Die Wellen oder Falten dienen gleichzeitig sowohl als elektrische Barriereanordnung im Isolierfluid als auch zur Erhöhung der elektrischen Gleitstrecken.

FIG 7 zeigt ein Ausführungsbeispiel eines Hochspannungs-Durchführungssystems 1 im Längsschnitt, welches insbesondere für eine vertikale Durchführungsmontage geeignet ist. Es weist eine Vielzahl von radial und axial erstreckten Auswölbungen 3.3, 12.3 auf. Bei diesem Ausführungsbeispiel sind alle zur Vergrößerung der elektrischen Gleitstrecken angeordneten Ausformungen und Auswölbungen 3.3, 12.3 derart gestaltet, dass keine vertikalen nach oben abgeschlossenen Hohlräume entstehen, in denen sich aufsteigende Gase sammeln könnten. Das einzige, kegelförmig ausgebildete koaxiale Isolierflanschmodul 3.1 ist derart gestaltet, dass im Fluid aufsteigende Gasblasen radial nach außen geleitet werden. Im äußersten Isolierflanschmodul 3.1 des Hochspannungs-Durchführungssystems 1 kann eine nicht näher dargestellte verschließbare Entlüftungsvorrichtung angeordnet werden.

FIG 8 zeigt das Ausführungsbeispiel des Hochspannungs-Durchführungssystems 1 aus FIG 5 im Längsschnitt. Die konisch ausgebildeten, d. h. im Wesentlichen kegelstumpfmantelförmigen Isolierflanschmodule 3.1, 3.2 des modularen Hochspannungs-Durchführungssystems 1 sind im Ausführungsbeispiel jeweils abwechselnd ihre Ausrichtung ändernd angeordnet. Auf diese Weise wird die Ausbildung großer Gleitstrecken bei geringem axialem Raumbedarf möglich.

In allen Ausführungsbeispielen können die Isolierflanschmodule 3.1, 3.2 alternativ aus einem bearbeiteten Plattenmaterial und/oder Rohrhalbzeug, z. B. GFK gebildet werden. Die Isolierkörper der Kerndurchführungsmodule 4 und der Isolierflanschmodule 3.1, 3.2 können aus Schichten von Isoliermaterialien verschiedener Imprägniereigenschaften ausgebildet werden. Auch können spezielle Beschichtungen der Oberfläche des Isolierkörpers erfolgen.

Durch den modulartigen Aufbau des Hochspannungs-Durchführungssystems 1 kann ein Baukastensystem durch Wahl von mehreren Kerndurchführungsmodulen für verschiedene Ströme und Kombination mit dem/den jeweiligem/n Isolierflanschmodul/en der nächsthöheren Spannungsebene geschaffen werden.

## Patentansprüche

1. Hochspannungs-Durchführungssystem (1) zur isolierten Führung eines Stromleiters (2) durch eine Öffnung einer Wandung (9) zwischen zwei fluidgefüllten Räumen (8.1, 8.2), umfassend einen zentralen Stromleiter (2) und einen diesen dicht umgebenden, sich in radialer Richtung vom Stromleiter (2) erstreckenden Isolierkörper mit einer umgebenden äußeren Montagefläche (16) zur dichten Befestigung des Isolierkörpers an der Wandung (9), wobei der Isolierkörper aus mindestens zwei an einer Kontaktfläche verbundenen Modulen (3.1, 4) gebildet ist, wobei eines der Module (4) ein den Stromleiter (2) radial einhüllendes Kerndurchführungsmodul (4) bildet und die Kontaktfläche den Stromleiter (2) beabstandet umschließt,
**dadurch gekennzeichnet, dass**
in einer Aufsicht das Kerndurchführungsmodul kreisförmig ausgebildet ist und die Teile des Kerndurchführungsmoduls (4), die das elektrische Potential des Stromleiters (2) führen, insbesondere hinsichtlich ihrer geometrischen Gestaltung derart auf eine maximal vorgesehene Anzahl von Modulen (3.1, 3.2, 4) ausgelegt sind, dass bei der bei der maximal vorgesehenen Anzahl von Modulen (3.1, 4.2, 4) auftretenden Spannung die zulässige elektrische Feldstärke der eingesetzten Isoliermaterialien des Kerndurchführungsmoduls (4) nicht überschritten wird, wobei die jeweilige Kontaktfläche zwischen zwei Montageflächen der jeweils an ihr verbundenen Module (3.1, 3.2, 4) gebildet ist und wobei in der Kontaktfläche zwischen zwei Montageflächen eine Dichtung (5) angeordnet ist.

2. Hochspannungs-Durchführungssystem (1) nach Anspruch 1, bei dem der Isolierkörper zumindest teilweise die Trennschicht zwischen den fluidgefüllten Räumen (8.1, 8.2) darstellt.

3. Hochspannungs-Durchführungssystem (1) nach Anspruch 1 oder 2, bei dem der Isolierkörper aus mehr als zwei an jeweils einer Kontaktfläche verbundenen Modulen (3.1, 3.2, 4) gebildet ist, wobei die Kontaktflächen den Stromleiter (2) beabstandet umschließen und in radialer Richtung ineinander geschachtelt sind.

4. Hochspannungs-Durchführungssystem (1) nach einem der vorhergehenden Ansprüche, das im Wesentlichen rotationssymmetrisch ausgebildet ist.

5. Hochspannungs-Durchführungssystem (1) nach einem der vorhergehenden Ansprüche, bei dem die äußere Montagefläche und eine Kontaktfläche und/oder benachbarte Kontaktflächen in axialer Richtung voneinander beabstandet sind.

6. Hochspannungs-Durchführungssystem (1) nach Anspruch 5, bei dem die axiale Abfolge der Kontaktflächen anhand der Größe des jeweiligen Umfangs angeordnet ist.

7. Hochspannungs-Durchführungssystem (1) nach einem der vorhergehenden Ansprüche, bei dem zumindest eines der Module (3.1, 3.2, 4) eine umlaufende Auswölbung aufweist.

8. Hochspannungs-Durchführungssystem (1) nach einem der vorhergehenden Ansprüche, bei dem zumindest eines der Module (3.1, 3.2, 4) einen in radialer Richtung wellenförmigen Querschnitt aufweist.

9. Hochspannungs-Durchführungssystem (1) nach einem der vorhergehenden Ansprüche, bei dem das Kerndurchführungsmodul (4) und/oder das jeweilige andere Modul (3.1, 3.2) aus einem Polymer geformt ist.

10. Hochspannungs-Durchführungssystem (1) nach einem der vorhergehenden Ansprüche, bei dem das Kerndurchführungsmodul(4) ein koaxial um den Stromleiter (2) liegendes, zylindermantelförmiges metallisches Beschirmungsformteil (14) umfasst.

11. Hochspannungs-Durchführungssystem (1) nach Anspruch 10, bei dem das Beschirmungsformteil (14) als Streckmetallkorb ausgebildet ist.

12. Hochspannungs-Durchführungssystem (1) nach einem der Ansprüche 10 bis 11, bei dem das Kerndurchführungsmodul (4) und/oder das jeweilige andere Modul (3.1, 3.2) eine innenliegende Verstärkung (3.5) aus einem Faserverbundwerkstoff aufweist.

13. Hochspannungs-Durchführungssystem (1) nach einem der vorhergehenden Ansprüche, bei dem das radial am weitesten vom Stromleiter (2) entfernte Modul (3.1, 3.2) einen Spannungsmessanschluss (33) aufweist.

14. Transformator (44) mit einem Hochspannungs-Durchführungssystem (1) nach einem der vorhergehenden Ansprüche.

## Claims

1. High-voltage bushing system (1) for the insulated guidance of a current conductor (2) through an opening in a wall (9) between two fluid-filled spaces (8.1, 8.2), comprising a central current conductor (2) and an insulating body that tightly surrounds the latter, extends in the radial direction from the current conductor (2) and has a surrounding outer mounting surface (16) for tight fastening of the insulating body to the wall (9), wherein the insulating body is formed from at least two modules (3.1, 4) connected at a contact surface, wherein one of the modules (4) forms a core bushing module (4) radially enveloping the current conductor (2) and the contact surface encloses the current conductor (2) at a distance,
**characterized in that**,
in a plan view, the core bushing module is of circular design and the parts of the core bushing module (4) that carry the electrical potential of the current conductor (2) are designed, in particular in terms of their geometrical configuration, for a maximum envisaged number of modules (3.1, 3.2, 4) in such a way that, in the case of the voltage occurring with the maximum envisaged number of modules (3.1, 4.2, 4), the permissible electrical field strength of the insulating materials of the core bushing module (4) that are used is not exceeded, wherein the respective contact surface is formed between two mounting surfaces of the modules (3.1, 3.2, 4) respectively connected at said contact surface, and wherein a seal (5) is arranged in the contact surface between two mounting surfaces.

2. High-voltage bushing system (1) according to Claim 1, in which the insulating body at least partially constitutes the separating layer between the fluid-filled spaces (8.1, 8.2).

3. High-voltage bushing system (1) according to Claim 1 or 2, in which the insulating body is formed from more than two modules (3.1, 3.2, 4) connected at a respective contact surface, wherein the contact surfaces enclose the current conductor (2) at a distance and are nested in one another in the radial direction.

4. High-voltage bushing system (1) according to one of the preceding claims, which is essentially of rotationally symmetrical design.

5. High-voltage bushing system (1) according to one of the preceding claims, in which the outer mounting surface and a contact surface and/or adjacent contact surfaces are spaced apart from one another in the axial direction.

6. High-voltage bushing system (1) according to Claim 5, in which the axial sequence of the contact surfaces is arranged on the basis of the size of the respective circumference.

7. High-voltage bushing system (1) according to one of the preceding claims, in which at least one of the modules (3.1, 3.2, 4) has a circumferential protuberance.

8. High-voltage bushing system (1) according to one of the preceding claims, in which at least one of the modules (3.1, 3.2, 4) has a wave-shaped cross section in the radial direction.

9. High-voltage bushing system (1) according to one of the preceding claims, in which the core bushing module (4) and/or the respective other module (3.1, 3.2) is/are formed from a polymer.

10. High-voltage bushing system (1) according to one of the preceding claims, in which the core bushing module (4) comprises a metallic shielding shaped part (14) that lies coaxially around the current conductor (2) and is in the shape of a cylinder casing.

11. High-voltage bushing system (1) according to Claim 10, in which the shielding shaped part (14) is in the form of an expanded metal basket.

12. High-voltage bushing system (1) according to either of Claims 10 and 11, in which the core bushing module (4) and/or the respective other module (3.1, 3.2) has an internal reinforcement (3.5) made from a fibre composite material.

13. High-voltage bushing system (1) according to one of the preceding claims, in which the module (3.1, 3.2) which is at the furthest radial distance from the current conductor (2) has a voltage measurement connection (33).

14. Transformer (44) having a high-voltage bushing system (1) according to one of the preceding claims.

## Revendications

1. Système (1) de traversée de haute tension pour faire passer de manière isolée un conducteur (2) de courant dans une ouverture d'une paroi (9) entre deux espaces (8.1, 8.2) emplis de fluide, comprenant un conducteur (2) de courant central et un corps isolant entourant celui-ci de manière étanche, s'étendant dans la direction radiale à partir du conducteur (2) de courant et ayant une surface (16) extérieure de montage faisant le tour pour la fixation de manière étanche du corps isolant à la paroi (9), dans lequel le corps isolant est formé d'au moins deux modules (3.1, 4) reliés sur une surface de contact, dans lequel l'un des modules (4) forme un module (4) de passage d'âme enveloppant radialement le conducteur (2) de courant et la surface de contact entoure à distance le conducteur (2) de courant,
**caractérisé en ce que**
dans une vue en plan, le module de passage d'âme est constitué sous la forme d'un cercle et les parties du module (4) de passage d'âme, qui conduisent le potentiel électrique du conducteur (2) de courant, sont, notamment du point de vue de leur conformation géométrique, conçus sur un nombre prévu au maximum de modules (3.1, 3.2, 4) de manière à ce que, à la tension se produisant pour le nombre prévu au maximum de modules (3.1, 4.2, 4), l'intensité admissible du champ électrique des matériaux isolants utilisés du module (4) de passage d'âme ne soit pas dépassée, dans lequel la surface de contact respective est formée entre deux surfaces de montage des modules (3.1, 3.2, 4) respectives, qui lui sont reliées, et dans lequel dans la surface de contact une garniture (5) d'étanchéité est disposée entre deux surfaces de montage.

2. Système (1) de traversée de haute tension suivant la revendication 1, dans lequel le corps isolant représente au moins en partie la couche de séparation entre les espaces (8.1, 8.2) emplis de fluide.

3. Système (1) de traversée de haute tension suivant la revendication 1 ou 2, dans lequel le corps isolant est formé de plus de deux modules (3.1, 3.2, 4) reliés respectivement sur une surface de contact, dans lequel les surfaces de contact entourent à distance le conducteur (2) de courant et sont imbriquées les unes dans les autres dans la direction radiale.

4. Système (1) de traversée de haute tension suivant l'une des revendications précédentes, qui est sensiblement de révolution.

5. Système (1) de traversée de haute tension suivant l'une des revendications précédentes, dans lequel la surface extérieure de montage et une surface de contact et/ou des surfaces de contact voisines sont à distance les unes des autres dans la direction axiale.

6. Système (1) de traversée de haute tension suivant la revendication 5, dans lequel la succession axiale des surfaces de contact est disposée à l'aide de la dimension du pourtour respectif.

7. Système (1) de traversée de haute tension suivant l'une des revendications précédentes, dans lequel au moins l'un des modules (3.1, 3.2, 4) a un cintrage faisant le tour.

8. Système (1) de traversée de haute tension suivant l'une des revendications précédentes, dans lequel au moins l'un des modules (3.1, 3.2, 4) a une section transversale ondulée dans la direction radiale.

9. Système (1) de traversée de haute tension suivant l'une des revendications précédentes, dans lequel le module (4) de passage d'âme et/ou l'autre module (3.1, 3.2) respectif est en un polymère.

10. Système (1) de traversée de haute tension suivant l'une des revendications précédentes, dans lequel le module (4) de passage d'âme comprend une pièce (14) moulée de blindage métallique en forme de gaine cylindrique disposée co-axialement autour du conducteur (2) de courant.

11. Système (1) de traversée de haute tension suivant la revendication 10, dans lequel la pièce (14) moulée de blindage est constituée sous la forme d'un panier en métal déployé.

12. Système (1) de traversée de haute tension suivant l'une des revendications 10 à 11, dans lequel le module (4) de passage d'âme et/ou l'autre module (3.1, 3.2) respectif a un renfort (3.5) intérieur en un matériau composite fibreux.

13. Système (1) de traversée de haute tension suivant l'une des revendications précédentes, dans lequel le module (3.1, 3.2) le plus loin radialement du conducteur (2) de courant a une borne (33) de mesure de la tension.

14. Transformateur (44) ayant un système (1) de traversée de haute tension suivant l'une des revendications précédentes.
